# EUROPEAN PATENT SPECIFICATION

(11) **EP 3 901 368 B1**
(45) Date of publication and mention of the grant of the patent: **30.07.2025**
(21) Application number: 21165978.4
(22) Date of filing: 30.03.2021
(51) Int. Cl.: D21F 5/18

(54) **A STATIONARY CLEANING UNIT AND AN ARRANGEMENT FOR PULP DRYER'S FAN TOWER**
STATIONÄRE REINIGUNGSEINHEIT UND ANORDNUNG FÜR DEN LÜFTERTURM EINES ZELLSTOFFTROCKNERS
UNITÉ DE NETTOYAGE FIXE ET AGENCEMENT POUR TOUR DE VENTILATION D'UN SÉCHEUR DE PÂTE

(30) Priority: 22.04.2020 FI 20205406
(43) Date of publication of application: 27.10.2021
(73) Proprietor: Valmet Technologies Oy, 02150 Espoo (FI)
(72) Inventor: SOLIN, Richard, 21200 RAISIO, (FI); JANSEN, Jean, 21200 RAISIO, (FI); TILLI, Tapani, 21200 RAISIO, (FI)
(74) Representative: TBK

(56) References cited:
- WO-A1-01/34905
- WO-A1-2012/131169

## Description

The present invention relates to a stationary cleaning unit and an arrangement for pulp dryer's fan tower as well as to a fan tower itself according to the preambles of enclosed independent claims.

In general, pulp is dried in a pulp dryer by air flotation drying, which uses hot air blows or the like. The dryer comprises at least one, usually several circulation fans that supply heated air to the drying devices. Circulation fans are usually arranged on top of each other to form so-called fan towers. Fan towers are arranged adjacent to the drying section of the pulp dryer. The fans are installed in the fan tower so that their suction openings are confined to the front and back sides of the fan tower, seen in the direction of the web movement.

The dryer further comprises heating devices, which heat the air before it enters as drying air into the drying section. Heating devices, such as heat exchangers or steam radiators, are arranged in front of the suction openings of the fans, i.e. on the front and back sides of the fan towers. The air is transferred to the fan through the heating device, from the entry side of the heating device to its exit side. In front of the heating devices, i.e. on their entry side, is usually arranged a filter net or the like to prevent dust and debris, such as shredded pulp, paper, fibres or the like from entering into the heating device and further into the fan. Dust and other debris remain attached to the filter net, i.e. the filter surface, which thus has to be cleaned every now and then.

Traditionally cleaning of the filter nets of the pulp dryer's heating devices, such as steam radiators, takes place manually with a dust suction apparatus, which resembles nozzle head and hose of a giant vacuum cleaner and which is connected to a central vacuum system of the pulp dryer. The cleaning takes place at least a few times per week, in practice often every day. The person operating the dust suction apparatus must, at least partly, enter the restricted space between the adjacent fan towers, where the temperature is high, even over 100 °C, and where the air humidity is high. The nozzle of the dust suction apparatus is moved manually on the surface of the net filter to be cleaned. The work is hard, very unpleasant and unergonomic.

Due to the reasons stated above, it is difficult to perform the dust suction with sufficient care, and it is also not always done often enough. Hot steam and condensate pipes also constitute an occupational safety risk for operators working in the restricted space between fan towers. Inadequate dust suction causes an increase of pressure loss and a reduction in the amount of air in the recirculation fans. This may lead in the dryer section to an impaired drying efficiency and to runnability problems, whereby the production of the pulp dryer decreases.

Various automatic or semiautomatic cleaning devices have been proposed, e.g. in WO 2005/124017. An automatic cleaning system is disclosed in WO 2001/34905, where a suction nozzle and a blower nozzle are arranged on opposite sides of the filter net. However, there is still a need to improve the cleaning of the filter nets in pulp dryers as well as the function of the automatic or semiautomatic cleaning devices.

An object of the present invention is to reduce or even eliminate the above-mentioned problems appearing in the prior art.

An object of the present invention is to provide a solution, with which the cleaning of the filter nets of the fan towers in a pulp dryer is easy and quick.

Another object of the present invention is to provide a stationary cleaning unit and arrangement, which provide reliable and effective cleaning operation even in demanding pulp dryer conditions and which are easy to fit even in restricted space between the fan towers.

In order to realise the above-mentioned objects, the invention is characterised by what is presented in the characterising parts of the enclosed independent claims.

The embodiments and advantages mentioned in this text relate, when applicable, to the cleaning unit, the cleaning arrangement and the fan tower according to the invention, even though they are not always specifically mentioned.

A typical stationary cleaning unit according to the present invention for a cleaning arrangement in a fan tower of a pulp dryer, comprises
- a suction device having a suction opening for removal of air and dust from a suction area,
- a replacement air device, which comprises blowing means arranged to provide replacement air to the suction area,

wherein the suction device and the replacement air device are arranged on a distance from each other to form filter net channel with an entry opening and an exit opening, and
wherein at least one sealing element is arranged in connection with the suction device at the entry opening or at the exit opening of the filter net channel, and the blowing means are arranged to blow replacement air towards the exit opening of the filter net channel.

A typical cleaning arrangement according to the present invention for pulp dryer's fan tower comprises
- a first rotatable spool and a second rotatable spool, which are parallel with each other and arranged on a distance from each other,
- a filter net having a length which is at least two times the distance between the first and second rotatable spools, the filter net having a first end attached to the first spool and a second end attached to the second spool, wherein the net is tensioned by reeling around the first and/or second spool,
- power transfer means arranged in connection with the first and second spools for operating them rotatably,
wherein the arrangement comprises at least two stationary cleaning units according to the present invention comprising a filter net channel formed between a suction device and a replacement air device, arranged in the vicinity of the first and the second spool, wherein the filter net is arranged to be transported through the filter net channels of the stationary cleaning units.

A typical fan tower of a pulp dryer according to the present invention comprises
- at least one fan, preferably several superposed fans, arranged to remove moist air from a drying section of the pulp dryer and to blow heated air into the drying section of the pulp dryer,
- at least one heating device, such as a heat exchanger, a steam radiator or the like, which is arranged on the suction side of said fan,
- at least one cleaning arrangement according to the invention arranged on the side of the heating device which faces away from the fan for protecting the heating device and for filtering the air to be heated before it is led to the heating device.

A typical pulp dryer according to the present invention comprises at least one fan tower according to the invention.

Now it has been surprisingly found that the function and efficiency of a stationary cleaning unit comprising a suction device and a replacement air device can be significantly improved by arranging at least one sealing element in connection with the suction device at the entry or exit opening and by arranging the replacement air device to blow replacement air towards the exit opening. In this manner it is possible to successfully control the conditions at the suction area as well as to ensure the smooth operation of the cleaning unit. Unexpected efficiency in removal of dust and debris from the filter net surface has been observed as the replacement air blow towards the exit opening of the filter net channel effectively ejects the dust, debris and the like from the filter net surface and transfers it towards the suction opening without creating harmful turbulence at the suction area. Furthermore, the directing of the replacement air blow towards the exit opening provides steady transfer of the filter net through the filter net channel and past the suction device and replacement air device. The problems encountered with prior art devices where the blow was targeted directly to the suction, where decreased or completely solved and the cleaning results were unpredictably improved. The sealing of the suction area with sealing elements located at entry and/or exit opening and the directed replacement air blow make it also possible to increase the amount of air that is removed by the suction device from the suction area.

The stationary cleaning unit according to the present invention comprises a suction device and a replacement air device that are arranged on a distance from each other to form filter net channel with an entry opening and an exit opening. The distance between the suction opening of the suction device and the replacement air device, i.e. the width of the filter net channel, may be less than 200 mm, preferably less than 150 mm, for example in a range of 5 - 200 mm, preferably 10 - 150 mm or 10 - 100 mm. The filter net is arranged to be transported through the filter net channel, supported at least by the suction from the suction device and air blow(s) from the replacement air device. The filter net is cleaned from dust and/or other debris during its transport through the filter net channel. This means that the suction device is arranged on the first side of the filter net and the replacement air device is arranged on the second side of the filter net, opposite to the suction device. The suction opening and the blowing means are arranged to face each other. The replacement air device is arranged to blow air through the filter net during the filter net's transport through the filter net channel. In this manner formation of a local underpressure on the second side of the filter net can be avoided, the filter net's transport is stabilized, and at the same time the cleaning action of the filter net surface can be enhanced as the air blows effectively loosen and carry dust away from the filter net. The short distance between the suction device and the replacement air device provides improved suction efficiency and effective dust and debris removal, while minimising the space needed for the cleaning unit.

The suction device of the cleaning unit is arranged to remove air, dust and debris from the suction area on a first side of the filter net, when the filter net is moving or transported through the filter net channel past the suction device. The suction device is preferably arranged to extend over the whole width of the filter net to be cleaned, i.e. the suction device preferably has a width which corresponds to the width of the filter net. The suction device of the cleaning unit has a suction opening for removal of air, dust, debris and the like from a suction area. The suction area is here understood as the area on the filter net surface onto which the suction opening exerts a suction impact. The suction area extends, at the maximum, from the entry opening to the exit opening of the filter net channel. The height of the suction area may be < 200 mm, for example 20 - 100 mm, seen in direction of movement of the filter. The height of the suction opening, and thus the height of the suction area, may be adjustable, e.g. by using adjustment means such as adjustment screws or the like. The width of the suction opening preferably corresponds to the width of the filter net. The suction opening of the suction device preferably extends from a first end of the suction device to a second end of the suction device and over the whole width of the filter net.

The suction opening of the suction device is arranged at a suitable distance from the filter net to ensure the formation of an effective suction area on the filter net surface. The distance between the suction opening and the filter net surface may be, for example, less than 100 mm, preferably less than 70 mm, for example 0 - 50 mm.

The suction device may comprise a hollow body, where dust, debris and the like are transferred from the filter net surface through the suction opening. The suction opening is at a first end of a suction channel, which extends from the suction opening and leads the dust, debris and the like away from the filter net surface, preferably to the hollow body of the suction device. The suction channel has a cross-sectional area which may be formed as uniformly decreasing from the suction opening towards the hollow body. In general, the suction channel is free from steps, waists, cavities or other disruptions, which might cause flow turbulence and/or collection of dust/debris.

According to one preferable embodiment the suction device comprises a hollow body and a suction channel with a suction opening, wherein the suction channel is connected to the lower part of the hollow body, which preferably has a circular cross section. The hollow body may be in form of a pipe, tube or the like. The lower part is here understood as the part of the hollow body which is underneath an imaginary horizontal line drawn through the geometric centre of the hollow body. When the suction channel is connected to the lower part of the hollow body, the air which is removed from the suction area is brought into a circular motion which improves the ejection of this dust and/or debris laden air through the hollow body.

The suction device of the cleaning unit may preferably be arranged in connection with a central suction system or vacuum system of the pulp dryer. For example, the suction device may comprise a conduit leading to a quick release connection, which is arranged accessible from the service platform. The relatively short conduit leading from the hollow body of the suction device to the quick release connection is also easy to keep clean, e.g. by sweeping. When the filter net is to be cleaned, the hose of the central suction or vacuum system of the pulp dryer is connected to the quick release connection of the suction device.

The stationary cleaning unit comprises further a replacement air device, which comprises blowing means arranged to provide replacement air towards the exit opening of the filter net channel. It has been surprisingly found out that correctly directed blow of replacement air, i.e. towards the exit opening, is much more effective in removing dust and debris from the net while minimizing the risk for disturbances in filter net transfer. According to one embodiment of the invention the blowing means of the replacement air device comprise at least one blow opening. For example, the replacement air device may comprise a blow slot or a plurality of blow openings, such as blow holes or blow nozzles or blow nozzle groups, arranged in a row. Blow opening(s) may have a diameter or slot width in the range of 1 - 3 mm, preferably 1.5 - 2 mm, especially for feeding of pressurized air. Preferably, the replacement air device has a width which corresponds to the width of the filter net and/or to the width of the suction device. The width of the blowing means preferably corresponds to the width of the filter net and/or the width of the suction opening. The blowing means of the replacement air device preferably extends from a first end of the replacement air device to a second end of the replacement air device and over the whole width of the filter net. For example, the replacement air device may comprise an elongated blow slot extending preferably from the first end of the replacement air device to the second end of the device.

The replacement air device may be arranged in connection with a system providing pressurized air. For example, the blow nozzles or blow slot may be arranged in connection with the system providing pressurized air in the pulp mill. According to one preferable embodiment replacement air device may be a blow-off pipe, arranged to be fed with pressurised air, and comprising at least one horizontal row of blow openings or an elongated blow slot.

The distance between the replacement air device and the filter net to be cleaned may be less than 100 mm, preferably 5 - 50 mm.

According to one preferable embodiment the blowing means of the replacement air device may be arranged to blow replacement air towards the exit opening of the filter net channel in an angle of 5 - 45°, preferably 10 - 30°, measured from a horizontal imaginary reference line. The blow angle of the blowing means may be arranged adjustable, which means that the blow angle can be adjusted in order to obtain optimal operational stability and maximal dust/debris removal from the filter net surface. The correct positioning of the blowing means of the replacement air device may also improve the function of the sealing element arranged on the exit opening of the filter net channel and decrease the collection of dust and/or debris to the exit opening. In this manner the risk for blocking of the exit opening is decreased or even completely avoided.

According to one embodiment the blowing means of the replacement air device comprises blow nozzles or blow nozzle groups, where the blow direction of the nozzles may be adjustable also in a width direction of the filter net channel, i.e. in width direction of the filter net. This means that the of blow direction of the blowing means may be arranged adjustable towards the edges of the filter net or towards the horizontal central line of the filter net. In this manner the replacement air device can provide optimal replacement air supply in different operational conditions.

The replacement air device may comprise a support surface, arranged next to the blowing means in the blow direction of the blowing means. The support surface defines the filter net channel at its exit opening and provides support for the filter net, especially when a mechanical sealing element is arranged in connection with the suction device at the exit opening. The support surface may be appropriately formed to assist the blowing of the replacement air through the filter net at the desired blow angle. According to one embodiment of the invention the support surface may be curved surface. According to one embodiment the support surface may form an angle of 0 - 80°, preferably 10 - 80°, and enhance the blowing of replacement air by forcibly directing the blow(s) through the filter net transported through the filter net channel. The support surface may also function as a seal on the second side of the filter net at the exit opening of the filter net channel.

The stationary cleaning unit comprises at least one sealing element in connection with the suction device at the entry opening and/or at the exit opening of the filter net channel. A first sealing element may be arranged at the entry opening of the filter net channel, on the first side of the filter net, in connection with the suction device. The position of the first sealing element may be adjustable in relation to the replacement air device. This means that the width of the filter net channel at the entry opening can be optimised such that the entry of air to the suction area and the risk for dust/debris accumulation at the entry opening is minimised. The functioning of the cleaning unit is improved when the position of the first sealing element can be adjusted. The first sealing element may be a labyrinth sealing element, or it may contain parts, which are formed as labyrinth sealing element. Alternatively, the first sealing element may be a rotatable roll-like rounded border or rim that can be optionally supported against the filter net.

Preferably, the first sealing element may have a guide surface arranged to form a gap seal at the entry opening of the filter net channel, i.e. the first sealing element may form a mechanical seal that blocks the entry of air with the filter net surface to the suction area. The guide surface of the first sealing element may be tapering towards the entry opening. At the same time the gap seal allows dust and/or debris on the filter net surface to enter the suction area.

A second sealing element may be arranged at the exit opening of the filter net channel of the cleaning unit, in connection with the suction device, wherein the sealing element comprises a brush-like sealing member. The second sealing element, such as brush-like sealing member, may be arranged into a contact with the first side of the filter net for delimiting the suction area. The brush-like sealing member may comprise bristles that can be made of soft metal, such as brass. The second sealing element, especially when comprising brush-like sealing member, provides not only effective sealing of the suction area, but it also improves the cleaning effect when it is in slight contact with the filter net surface as the filter net is reeled past it. The second sealing element loosen dust and debris from the filter net surface that can then be removed by the suction device. The second sealing element is arranged to face the support surface of the replacement air device, which is on the second side of the filter net. The second sealing element and the support surface are thus opposite each other, forming the exit opening of the filter net channel.

According to one preferable embodiment the stationary cleaning unit comprises a support surface arranged next to the blowing means in the blow direction of the blowing means and a second sealing element at the exit opening of the filter net channel in connection with the suction device, arranged into a contact with the first side of the filter net. It has unexpectedly shown that the close arrangement of the replacement air blowing, appropriately formed support surface and the second sealing element at the exit opening of the filter net channel provides an improved cleaning efficiency and stabile function of the cleaning unit. According to one embodiment the blowing means of the replacement air device, support surface and second sealing element are arranged within 50 mm or less, preferably within 30 mm or less, from each other in height direction of the filter channel, i.e. travel direction of the filter net.

A further sealing element may be arranged at the entry opening of the filter net channel in the connection with the replacement air device, approximately against the first sealing element, but on the second side of the filter net.

The stationary cleaning unit may alternatively or in addition comprise a further blowing means arranged in connection with the suction device to blow towards the exit opening of the filter net channel and for providing sealing of the exit opening. The further blowing means may structurally be identical to the blowing means of the replacement air device. The further blowing means for sealing the exit opening may comprise at least one blow slot or a plurality of blow openings arranged in a row.

It is also possible to arrange additional blowing means in connection with the suction device at the entry opening of the filter net channel to blow towards the suction area.

The cleaning arrangement according to the present invention comprises in addition to the stationary cleaning units a first rotatable spool and a second rotatable spool, which are parallel with each other and arranged on a distance from each other. The distance between the spools may be freely determined, depending on the dimensions of the heating devices and fan towers. Typically, the cleaning arrangement is arranged to protect or cover a plurality of superposed heating devices. For example, one arrangement may be arranged to cover 1 - 5, preferably 1 - 3, heating devices. The distance between the first spool and the second spool may be, for example, 1 - 20 m, preferably 2 - 10 m.

The first and second rotatable spools comprise an axis and flanges at the ends of the axis. The spools are made of metal, preferably steel. Preferably the length of the spool axis corresponds to the width of the filter net used in the arrangement.

The stationary cleaning units are arranged in fixed positions in the vicinity of the first and the second spools. In this manner the surface of that part of the filter net, which is reeled or wound around the spool, becomes clean. The stationary cleaning units do not comprise moving parts that are easily damaged or require extensive maintenance. This increases the overall robustness of the cleaning units and the cleaning arrangement. The stationary cleaning units are relatively small in size and compact, which means that they can easily fitted even as retrofit in the restricted spaces between the adjacent fan towers in the existing pulp dryers. Furthermore, the compactness of the cleaning units, which is due to close arrangement of the suction device and the replacement air device, among others, minimises the disturbances in air flows around the stationary cleaning unit.

The filter net has a length, which is at least two times the distance between the first and second rotatable spools. According to one embodiment of the invention the length of the filter net is at least two times the distance between the first and second rotatable spools, but less than 2.5 times the distance. This means that a part of the filter net covers the heating device(s) in a conventional manner, while another part of the net is wound or coiled around the first and/or second spool. During the normal operation at least half of the filter net is coiled or wound around first and/or second spool, while the rest of the filter net is tensioned between the spools and forms a flat even filter net surface. The length of the filter net reeled around the spool is at least the same as the length of the filter net tensioned between the spools, or longer. The filter net has a first end, which is permanently attached to the first spool and a second end, which is permanently attached to the second spool. The end of the filter net may be attached to the axis of the spool, for example by using elongated attachment strip.

The filter net may be any net that is suitable for the purpose and withstands the hot and humid environment of the pulp dryer. According to one preferable embodiment the filter net is made of stainless steel. The filter net may be a woven filter net with e.g. 0.31x0.31 mm apertures. The filter net has a first side facing the space between the fan towers and a second side facing the heating device.

According to the invention the filter net in a pulp dryer can be effectively and easily cleaned by using a cleaning arrangement comprising where the filter net is reeled from spool to spool and simultaneously, during reeling, the surface of the filter net is cleaned with a stationary cleaning unit comprising at least a suction device. The filter net is reeled back-and-forth between the spools, while the cleaning units are immovable, arranged in fixed positions. In operation, the first part of the filter net is filtering the dust and debris, while the clean second part of the filter net is coiled around one of the spools. When the first part of the filter net is to be cleaned, the first part of the filter net is reeled around the other spool and simultaneously cleaned by the cleaning unit before it is reeled around the spool. At the same time the clean second part of the filter net is unreeled from the other spool to cover the heating devices and to filter dust and debris. When the second part of the filter net becomes fouled, the cleaning operation is repeated by reeling the second part around the spool and unreeling the clean first part. The cleaning arrangement thus provides a mechanically simple and reliable construction, which however is able to achieve remarkably good cleaning results. Furthermore, the cleaning arrangement is easy to scale to different sizes, which makes it suitable for use in various pulp dryers around the world. The cleaning arrangement is also easy to use, and it improves working conditions of the operators and increases their motivation to perform the cleaning actions.

According to one preferable embodiment the filter net is tensioned with tension rolls arranged in the vicinity of the first and second spools, as well as the suction device and/or replacement air device. The tension rolls may be arranged dealigned from the general filter net plane, on the same side of the net as the suction device, i.e. the first side. The tension rolls and/or support surfaces tension the filter net around from the suction device and prevent its fluttering. Furthermore, the support surface may provide support for the sealing elements, which may press the filter net towards the support surface.

Typically, a fan tower of a pulp dryer comprises at least one fan, preferably several superposed fans, typically 2 - 12, more typically 4 - 10 superposed fans. The fans are arranged to remove moist air from a drying section of the pulp dryer and to blow heated air into the drying section of the pulp dryer. The drying section of the pulp dryer comprises a plurality of horizontal drying decks, where pulp web is dried by hot air blows generated by drying devices. The fans supply heated air to the drying devices, and therefore at least one heating device, such as a heat exchanger, a steam radiator or the like, is arranged on the suction side of said fan for heating the air entering the fan. The heating device has a first side which faces the fan and a second opposite side facing away from the fan. The cleaning arrangement according to the invention is arranged on the second side of the heating device, i.e. on the side that faces away from the fan. The cleaning arrangement is arranged to protect the heating device and to filter the air to be heated before it is led to the heating device.

The cleaning arrangement further comprises power transfer means arranged in connection with the first and second spool for operating them rotatably. By rotating the first and second spool it is possible to reel the filter net around the first or second spool and simultaneously free the net from the other spool, as desired. According to one preferable embodiment the power transfer means may comprise a number of sprockets and a chain, which are arranged to rotate the first and second spool. A sprocket or cog may be arranged in the end of the spool, where it may form or replace the flange at one end of the spool axis. The chain is arranged to pass around the sprockets and to rotate the spools. The power transmission means may be operable with machine power, e.g. cordless driver, or with human power. Preferably the power transmission means are manually operable, for example by a crank or rotatable wheel. The power transmission means may also be operable with a pedal, if desired. When the power transmission means are operable with human power or with e.g. cordless driver, the cleaning arrangement contains less electrical parts and it is easy to service and maintain, even in demanding conditions. Furthermore, the construction and use of such cleaning arrangement is inexpensive and simple. The devices needed for operation, such as crank or rotatable wheel, are preferably arranged accessible from a service platform, so that the operator does not need to enter the cramped space between two adjacent fan towers.

The cleaning arrangement may comprise a mechanical limiter, which is arranged in connection with the first and second spool to prevent excess reeling. The mechanical limiter stops the rotation of the spool when the filter net has been completely reeled away from the spool. The mechanical limiter may be arranged or attached to the spool or the mechanical limiter may be arranged or attached to the suitable location on the chain of the power transmission means in order to restrainingly interact with the spool and to prevent its rotation.

The cleaning arrangement may comprise side supports, which comprise side sealing elements in contact with the first side of the filter net. The side supports, as well as the side sealing elements extend preferably from the first spool to the second spool. The side supports may be made of metal. e.g. steel, stainless steel or aluminium profile. The arrangement is preferably attached to the fan tower structures by the side supports. The side sealing elements may be similar to the sealing elements of the cleaning unit. For example, the side sealing elements they may be brush-like sealing members made of soft metal. The side sealing elements are in contact with the first side of the filter net and they are arranged to push the filter net tightly towards the net-like support structure arranged on the second side of the filter net. The side sealing elements are preferably arranged deflecting towards the central line of the filter net in its length direction.

According to one embodiment of the invention the cleaning arrangement comprises a support net structure, arranged on the second side of the filter net. The support net has coarser mesh size than the filter net itself, and it is intended to support the filter net and ensure that the filter net remains flat and tensioned between the spools. The support net structure is attached to the side supports.

The cleaning arrangement may further comprise a cleaning indicator system, which comprises at least one pressure sensor arranged on the second side of the filter net. When the underpressure on the second side of the filter net exceeds a pre-determined limit value, the cleaning indicator system is arranged to provide an alarm, which indicates the cleaning need of the filter net. The alarm may be a visual alarm, e.g. flashing light arranged on the location of the filter net needing cleaning. Alternatively, or in addition, the cleaning indicator system may be in functional contact with one of the control systems of the pulp dryer, and the alarm is provided in an operating room of the pulp dryer. In this way the cleaning arrangement may provide real-time information of the cleaning need of the filter nets, which reduces unnecessary or wrongly situated cleaning.

The following schematical non-limiting drawings further demonstrates certain aspects of the present invention. The invention may be better understood by reference to the drawings in combination with the detailed description of the embodiments presented herein.
- Figure 1: shows a fan tower according to one embodiment of the invention,
- Figure 2: shows an embodiment of the power transmission means of a cleaning arrangement according to the present invention,
- Figure 3A: shows an embodiment of a cleaning unit according to the present invention,
- Figure 3B: shows another embodiment of a cleaning unit according to the present invention, and
- Figure 4: shows another embodiment of the arrangement of the present invention.

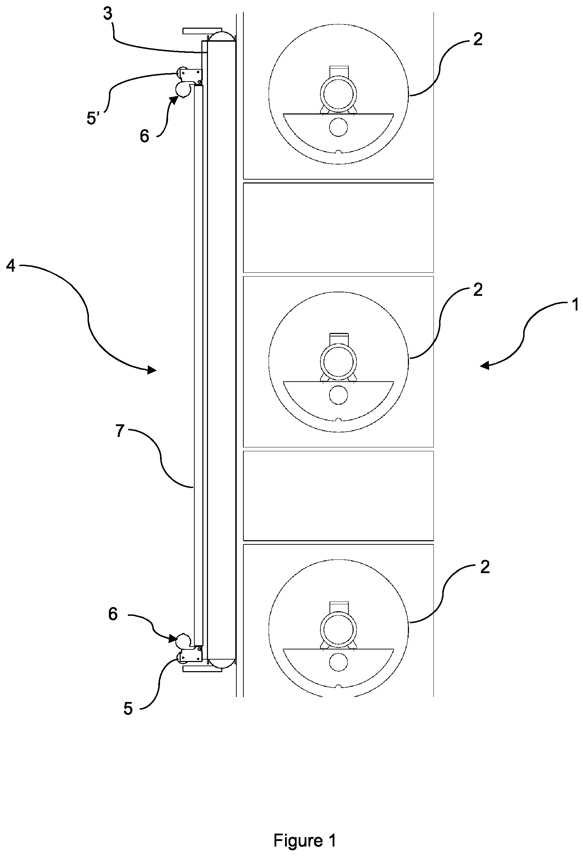

Figure 1 shows a fan tower 1 according to one embodiment of the invention. Fan tower 1 comprises a plurality of fans 2 as well as a heating device 3 arranged on the suction side of the fans 2. An arrangement 4 according to the present invention is arranged on the side of the heating device 3 which faces away from the fan 2. The arrangement 4 comprises a first rotatable spool 5 and a second rotatable spool 5', which are parallel with each other. Immovable stationary cleaning units 6 are arranged in the close vicinity of the first and the second spools 5, 5'. Side supports 7 (only one is shown in Figure 1) connect the first and second spools 5, 5'. The filter net (not shown) is partly tensioned between the spools 5, 5' and partly wound around one of the spools.

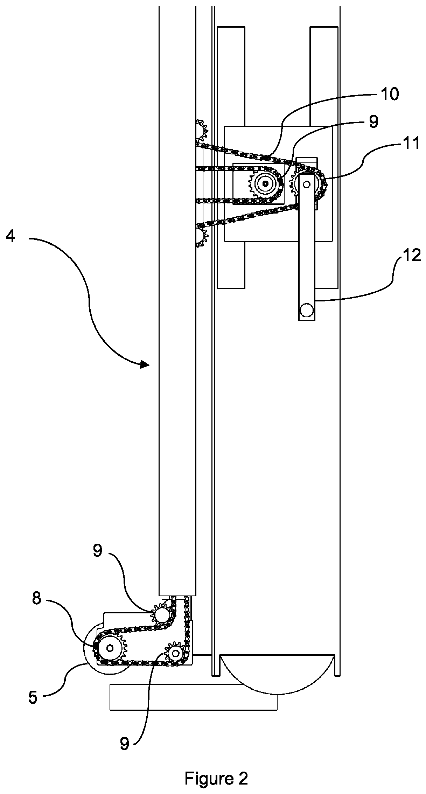

Figure 2 shows an embodiment of the power transmission means of an arrangement 4 according to the present invention. The power transmission means comprises a main sprocket 8 attached to the end of the spool 5 as well as a chain 10 that are arranged to rotate the spool 5. The power transmission means may further comprise a plurality of additional sprockets 9, which help to tension the chain 10 running around them. The chain 10 runs around a crank sprocket 11, which can be rotated by rotating a crank 12. The movement of the crank 12 is transferred to the main sprocket 8 at the end of the spool 5 by using a simple mechanical power transmission means comprising the chain 10 and a necessary number of additional sprockets 9.

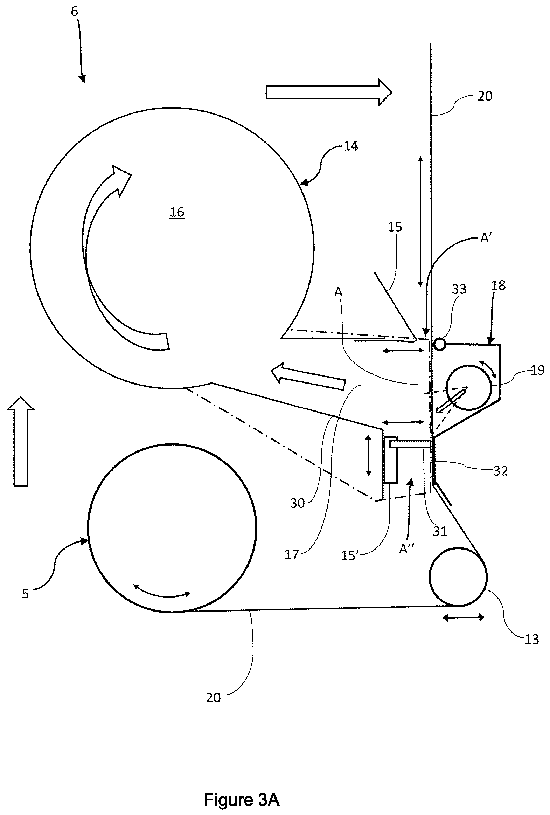

Figure 3A shows an embodiment of a stationary cleaning unit 6 according to the present invention. A filter net 20 is attached to a spool 5. The filter net 20 is tensioned with a tension roll 13 arranged in the vicinity of the spool 5. The location, such as distance from the spool 5, of the tension roll is adjustable for proper tensioning of the filter net 20, as indicated by black double-headed arrow. A stationary cleaning unit 6 is arranged in the close vicinity of the spool 5. The cleaning unit 6 comprises a suction device 14, which comprises a hollow body 16, a suction opening 17, and a suction channel 30. The cleaning unit 6 comprises also a replacement air device 18, which comprises a blowing means 19. A filter net channel is formed between the suction device 14 and the replacement air device 18 and the filter net 20 is arranged to be transported through the filter net channel while the suction device 14 is removing debris and dust from a suction area A on a first side of the filter net 20. The suction area A extends from the entry opening A' of the filter net channel to the exit opening A" of the filter net channel. In Figure 3A the suction area A is delimited by a first sealing element 15 which is arranged at the entry opening A' of the filter net channel. The distance of the first sealing element 15 from the filter net 20 is adjustable as indicated by the double-headed arrow. The suction area A is further delimited by a second sealing element 15' arranged at the exit opening A" of the filter net channel. The second sealing element 15' comprises brush-like sealing member 31, which is arranged in a slight contact with the first side of the filter net 20. The distance and height location of the second sealing element 15' is adjustable as indicted by the double-headed arrows.

The blowing means 19 are arranged to blow through the filter net 20 towards the exit opening A" of the filter net channel. The blow angle of the blowing means 19 is adjustable, as indicated by the black double-headed arrow. The blowing means 19 can be rotated around its longitudinal axis in order to provide the desired blow angle towards the exit opening A". A support surface 32 is arranged next to the blowing means 19 in the blow direction of the blowing means. The support surface 32 provides support for the filter net 20, effectively directs the blown replacement air through the filter net and improves the cleaning of the surface of the filter net 20. A further sealing element 33 is seen at the entry opening A' of the filter net channel, attached to the replacement air device 18.

It is seen from Figure 3A that the cleaning unit 6 is relatively small and compact, which means that it does not disturb the air flows, indicated with white arrows, which are flowing around it in the spaces between the adjacent fan towers. Furthermore, the smooth and uniform design of the suction channel 30 and the connection of the suction channel 30 to the lower part of the hollow body 16 ensure the effective and turbulence-free air flow within the suction channel 30, as indicated with the white arrows.

In Figure 3A a dashed line shows an alternative form of the suction channel 17.

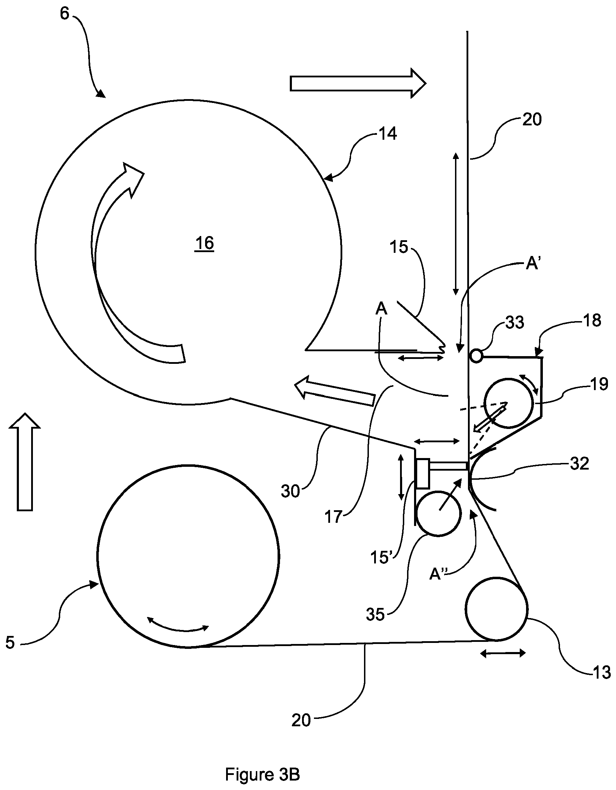

Figure 3B shows an another embodiment of a stationary cleaning unit according to the present invention. The reference numbering corresponds to the reference numbering of Figure 3A, i.e. the same parts have the same reference number. It is seen from Figure 3B that the first sealing element 15 is formed as a labyrinth seal. The support surface 32, arranged next to the blowing means 19, is curved.

The stationary cleaning unit 6 in Figure 3B comprise a further blowing means 35 arranged in connection with the suction device 14 at the exit opening A" of the filter net channel.

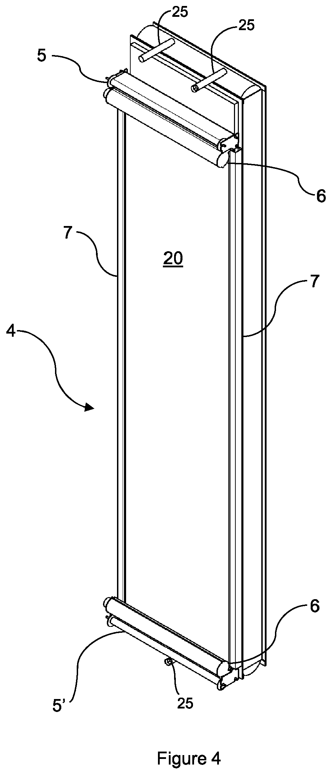

Figure 4 shows another embodiment of the arrangement 4 of the present invention. The arrangement 4 comprises a first rotatable spool 5 and a second rotatable spool 5', which are parallel with each other. Immovable cleaning units 6 are arranged in the close vicinity of the first and the second spools 5, 5'. Side supports 7 connect the first and second spools 5, 5' and the filter net 20 is tensioned between the spools 5, 5'. The steam inlet and condensate connections 25 of the heating device are also visible in Figure 4.

Even if the invention was described with reference to what at present seems to be the most practical and preferred embodiments, it is appreciated that the invention shall not be limited to the embodiments described above, but the invention is intended to cover also different modifications and equivalent technical solutions within the scope of the enclosed claims.

The invention relates to a stationary cleaning unit for a cleaning arrangement in a fan tower of a pulp dryer. The cleaning unit comprises a suction device having a suction opening for removal of air and dust from a suction area and a replacement air device, which comprises blowing means arranged to provide replacement air to the suction area. The suction device and the replacement air device are arranged on a distance from each other to form filter net channel with an entry opening and an exit opening. At least one sealing element is arranged in connection with the suction device at the entry opening or at the exit opening of the filter net channel, and the blowing means are arranged to blow replacement air towards the exit opening of the filter net channel.

## Claims

1. A stationary cleaning unit (6) for a cleaning arrangement (4) in a fan tower (1) of a pulp dryer, the cleaning unit (6) comprising
- a suction device (14) having a suction opening (17) for removal of air and dust from a suction area (A),
- a replacement air device (18), which comprises blowing means (19) arranged to provide replacement air to the suction area (A),
wherein the suction device (14) and the replacement air device (18) are arranged on a distance from each other to form filter net channel with an entry opening (A') and an exit opening (A"),
**characterised in that**
at least one sealing element (15, 15') is arranged in connection with the suction device (14) at the entry opening (A') or at the exit opening (A") of the filter net channel, and that the blowing means (19) are arranged to blow replacement air towards the exit opening (A") of the filter net channel.

2. The stationary cleaning (6) unit according to claim 1, **characterised in that** the blowing means (19) are arranged to blow replacement air in an angle of 5 - 45°, preferably 10 - 30°, measured from a horizontal reference line.

3. The stationary cleaning unit (6) according to claim 1 or 2, **characterised in that** the blowing means (19) of the replacement air device (18) comprise at least one blow opening such as a blow slot or a plurality of blow openings arranged in a row.

4. The stationary cleaning unit (6) according to claim 1, 2 or 3, **characterised in that** the replacement air device (18) is blow-off pipe, arranged to be fed with pressurised air, comprising at least one row of blow openings or an elongated blow slot.

5. The stationary cleaning unit (6) according to any of preceding claims 1 - 4, **characterised in that** a first sealing element (15) is arranged at the entry opening (A') of the filter net channel and its position from the replacement air device (18) is adjustable.

6. The stationary cleaning unit (6) according to claim 5, **characterised in that** the first sealing element (15) has a guide surface arranged to form a gap seal towards the entry opening (A') of the filter net channel.

7. The stationary cleaning unit (6) according to any of preceding claims 1 - 6, **characterised in that** the suction device (14) comprises a hollow body (16) and a suction channel (30) with the suction opening (17), wherein the suction channel (30) is connected to the lower part of the hollow body (16).

8. The stationary cleaning unit (6) according any of preceding claims 1 - 7, **characterised in that** a second sealing element (15') is arranged at the exit opening (A") of the filter net channel, wherein the sealing element (15') comprises a brush-like sealing member (31).

9. The stationary cleaning unit (6) according to any of preceding claims 1 - 8, **characterised in that** it comprises a further blowing means (35) arranged in connection with the suction device (14) to blow towards the exit opening (A") of the filter net channel.

10. The stationary cleaning unit (6) according to any of preceding claims 1 - 9, **characterised in that** the replacement air device (18) comprises a support surface (32), arranged to define the filter net channel at the exit opening (A").

11. The stationary cleaning unit (6) according to claim 10, **characterised in that** the support surface (32) is curved.

12. A cleaning arrangement (4) for pulp dryer's fan tower (1), the arrangement (4) comprising
- a first rotatable spool (5) and a second rotatable spool (5'), which are parallel with each other and arranged on a distance from each other,
- a filter net (20) having a length which is at least two times the distance between the first and second rotatable spools (5, 5'), the filter net (20) having a first end attached to the first spool (5) and a second end attached to the second spool (5'), wherein the net (20) is tensioned by reeling around the first and/or second spool (5, 5'),
- power transfer means (8, 9, 10, 11, 12) arranged in connection with the first and second spool (5, 5') for operating them rotatably,
**characterised in that** the arrangement (4) comprises at least two stationary cleaning units (6) according to any of claims 1 - 9 comprising a filter net channel formed between a suction device (14) and a replacement air device (18), arranged in the vicinity of the first and the second spool (5, 5'), wherein the filter net (20) is arranged to be transported through the filter net channels of the stationary cleaning units (6).

13. Arrangement (4) according to claim 12, **characterised in that** the power transfer means comprise a number of sprockets (8, 9, 11) and a chain (10), arranged to rotate the first and second spool (5, 5'), wherein the power transmission means are preferably manually operable, for example by a crank (12).

14. Arrangement (4) according to claim 12 or 13, **characterised in that** the suction device (14) is arranged in connection with a central suction system.

15. A fan tower (1) of a pulp dryer comprising
- at least one fan (2), preferably several superposed fans (2), arranged to remove moist air from a drying section of the pulp dryer and to blow heated air into the drying section of the pulp dryer,
- at least one heating device (3), such as a heat exchanger, a steam radiator or the like, which is arranged on the suction side of said fan (2),
- at least one arrangement (4) according to claim 13 or 14 arranged on the side of the heating device (3) which faces away from the fan (2) for protecting the heating device (3) and for filtering the air to be heated before it is led to the heating device (3).

## Patentansprüche

1. Stationäre Reinigungseinheit (6) für eine Reinigungsanordnung (4) in einem Gebläseturm (1) eines Zellstofftrockners, wobei die Reinigungseinheit (6) Folgendes aufweist
- eine Absaugvorrichtung (14), die eine Absaugöffnung (17) zum Entfernen von Luft und Staub aus einem Absaugbereich (A) hat,
- eine Ersatzluftvorrichtung (18), die Blasmittel (19) aufweist, die angeordnet sind, um dem Absaugbereich (A) Ersatzluft bereitzustellen,
wobei die Absaugvorrichtung (14) und die Ersatzluftvorrichtung (18) in einem Abstand voneinander angeordnet sind, um einen Filternetzkanal mit einer Eintrittsöffnung (A') und einer Austrittsöffnung (A'') zu bilden,
**dadurch gekennzeichnet, dass**
mindestens ein Dichtungselement (15, 15') in Verbindung mit der Absaugvorrichtung (14) an der Eintrittsöffnung (A') oder an der Austrittsöffnung (A") des Filternetzkanals angeordnet ist, und dass die Blasmittel (19) angeordnet sind, um Ersatzluft in Richtung der Austrittsöffnung (A'') des Filternetzkanals zu blasen.

2. Stationäre Reinigungseinheit (6) nach Anspruch 1, **dadurch gekennzeichnet, dass** die Blasmittel (19) angeordnet sind, um Ersatzluft in einem Winkel von 5 - 45°, vorzugsweise 10 - 30°, gemessen von einer horizontalen Bezugslinie, zu blasen.

3. Stationäre Reinigungseinheit (6) nach Anspruch 1 oder 2, **dadurch gekennzeichnet, dass** die Blasmittel (19) der Ersatzluftvorrichtung (18) mindestens eine Blasöffnung, wie etwa einen Blasschlitz oder eine Vielzahl von Blasöffnungen, aufweisen, die in einer Reihe angeordnet sind.

4. Stationäre Reinigungseinheit (6) nach Anspruch 1, 2 oder 3, **dadurch gekennzeichnet, dass** die Ersatzluftvorrichtung (18) ein Ausblasrohr ist, das angeordnet ist, um mit Druckluft versorgt zu werden, das mindestens eine Reihe von Blasöffnungen oder einen länglichen Blasschlitz aufweist.

5. Stationäre Reinigungseinheit (6) nach einem der vorhergehenden Ansprüche 1 - 4, **dadurch gekennzeichnet, dass** an der Eintrittsöffnung (A') des Filternetzkanals ein erstes Dichtungselement (15) angeordnet ist und dessen Position von der Ersatzluftvorrichtung (18) anpassbar ist.

6. Stationäre Reinigungseinheit (6) nach Anspruch 5, **dadurch gekennzeichnet, dass** das erste Dichtungselement (15) eine Führungsfläche hat, die angeordnet ist, um eine Spaltdichtung in Richtung der Eintrittsöffnung (A') des Filternetzkanals auszubilden.

7. Stationäre Reinigungseinheit (6) nach einem der vorhergehenden Ansprüche 1 - 6, **dadurch gekennzeichnet, dass** die Absaugvorrichtung (14) einen Hohlkörper (16) und einen Absaugkanal (30) mit der Absaugöffnung (17) aufweist, wobei der Absaugkanal (30) mit dem unteren Teil des Hohlkörpers (16) verbunden ist.

8. Stationäre Reinigungseinheit (6) nach einem der vorhergehenden Ansprüche 1 - 7, **dadurch gekennzeichnet, dass** an der Austrittsöffnung (A',) des Filternetzkanals ein zweites Dichtungselement (15') angeordnet ist, wobei das Dichtungselement (15') ein bürstenartiges Dichtungselement (31) aufweist.

9. Stationäre Reinigungseinheit (6) nach einem der vorhergehenden Ansprüche 1 - 8, **dadurch gekennzeichnet, dass** sie ein weiteres Blasmittel (35) aufweist, das in Verbindung mit der Absaugvorrichtung (14) angeordnet ist, um in Richtung der Austrittsöffnung (A") des Filternetzkanals zu blasen.

10. Stationäre Reinigungseinheit (6) nach einem der vorhergehenden Ansprüche 1 - 9, **dadurch gekennzeichnet, dass** die Ersatzluftvorrichtung (18) eine Stützfläche (32) aufweist, die angeordnet ist, um den Filternetzkanal an der Austrittsöffnung (A") zu begrenzen.

11. Stationäre Reinigungseinheit (6) nach Anspruch 10, **dadurch gekennzeichnet, dass** die Stützfläche (32) gekrümmt ist.

12. Reinigungsanordnung (4) für einen Gebläseturm (1) eines Zellstofftrockners, wobei die Anordnung (4) Folgendes aufweist
- eine erste drehbare Spule (5) und eine zweite drehbare Spule (5'), die parallel zueinander und in einem Abstand zueinander angeordnet sind,
- ein Filternetz (20), das eine Länge hat, die mindestens zweimal den Abstand zwischen der ersten und der zweiten drehbaren Spule (5, 5') beträgt, wobei das Filternetz (20) ein erstes Ende, das an der ersten Spule (5) befestigt ist, und ein zweites Ende hat, das an der zweiten Spule (5') befestigt ist, wobei das Netz (20) durch Aufwickeln um die erste und/oder zweite Spule (5, 5') gespannt ist,
- Kraftübertragungsmittel (8, 9, 10, 11, 12), die in Verbindung mit der ersten und zweiten Spule (5, 5') zum drehbaren Betreiben dieser angeordnet sind,
**dadurch gekennzeichnet, dass** die Anordnung (4) mindestens zwei stationäre Reinigungseinheiten (6) nach einem der Ansprüche 1 - 9 aufweist, die einen Filternetzkanal aufweisen, der zwischen einer Absaugvorrichtung (14) und einer Ersatzluftvorrichtung (18) ausgebildet ist, die in der Umgebung der ersten und zweiten Spule (5, 5') angeordnet sind, wobei das Filternetz (20) angeordnet ist, um durch die Filternetzkanäle der stationären Reinigungseinheiten (6) transportiert zu werden.

13. Anordnung (4) nach Anspruch 12, **dadurch gekennzeichnet, dass** die Kraftübertragungsmittel eine Anzahl von Ritzeln (8, 9, 11) und eine Kette (10) aufweisen, die angeordnet sind, um die erste und zweite Spule (5, 5') zu drehen, wobei die Kraftübertragungsmittel vorzugsweise manuell, zum Beispiel durch eine Kurbel (12), betätigbar sind.

14. Anordnung (4) nach Anspruch 12 oder 13, **dadurch gekennzeichnet, dass** die Absaugvorrichtung (14) in Verbindung mit einem zentralen Absaugsystem angeordnet ist.

15. Gebläseturm (1) eines Zellstofftrockners, der Folgendes aufweist
- mindestens ein Gebläse (2), vorzugsweise mehrere überlagerte Gebläse (2), die angeordnet sind, um feuchte Luft aus einem Trocknungsbereich des Zellstofftrockners zu entfernen und um erwärmte Luft in den Trocknungsbereich des Zellstofftrockners zu blasen,
- mindestens eine Heizungsvorrichtung (3), wie etwa einen Wärmetauscher, einen Dampfradiator oder Ähnliches, die/der auf der Saugseite des Gebläses (2) angeordnet ist/sind,
- mindestens eine Anordnung (4) nach Anspruch 13 oder 14, die auf der Seite der Heizungsvorrichtung (3) angeordnet ist, die von dem Gebläse (2) abgewandt ist, zum Schützen der Heizungsvorrichtung (3) und zum Filtern der zu erwärmenden Luft, bevor sie zu der Heizungsvorrichtung (3) geleitet wird.

## Revendications

1. Unité de nettoyage stationnaire (6) pour un équipement de nettoyage (4) dans une tour de ventilation (1) d'un sécheur de pâte à papier, l'unité de nettoyage (6) comprenant
- un dispositif d'aspiration (14) ayant une ouverture d'aspiration (17) pour évacuer l'air et la poussière d'une zone d'aspiration (A),
- un dispositif d'air de remplacement (18), qui comprend des moyens de soufflage (19) agencés pour fournir de l'air de remplacement à la zone d'aspiration (A),
dans laquelle le dispositif d'aspiration (14) et le dispositif d'air de remplacement (18) sont disposés à distance l'un de l'autre pour former un canal de filet filtrant avec une ouverture d'entrée (A') et une ouverture de sortie (A"),
**caractérisée en ce que**
au moins un élément d'étanchéité (15, 15') est disposé en liaison avec le dispositif d'aspiration (14) à l'ouverture d'entrée (A') ou à l'ouverture de sortie (A'') du canal de filet filtrant, et que les moyens de soufflage (19) sont agencés pour souffler de l'air de remplacement vers l'ouverture de sortie (A") du canal de filet filtrant.

2. Unité de nettoyage stationnaire (6) selon la revendication 1, **caractérisée en ce que** les moyens de soufflage (19) sont agencés pour souffler de l'air de remplacement selon un angle de 5 à 45°, de préférence de 10 à 30°, mesuré à partir d'une ligne de référence horizontale.

3. Unité de nettoyage stationnaire (6) selon la revendication 1 ou 2, **caractérisée en ce que** les moyens de soufflage (19) du dispositif d'air de remplacement (18) comprennent au moins une ouverture de soufflage telle qu'une fente de soufflage ou une pluralité d'ouvertures de soufflage disposées en rangée.

4. Unité de nettoyage stationnaire (6) selon la revendication 1, 2 ou 3, **caractérisée en ce que** le dispositif d'air de remplacement (18) est un tuyau de soufflage, agencé pour être alimenté en air sous pression, comprenant au moins une rangée d'ouvertures de soufflage ou une fente de soufflage allongée.

5. Unité de nettoyage stationnaire (6) selon l'une quelconque des revendications précédentes 1 - 4, **caractérisée en ce qu'**un premier élément d'étanchéité (15) est disposé à l'ouverture d'entrée (A') du canal de filet filtrant et que la position de celui-ci par rapport au dispositif d'air de remplacement (18) est réglable.

6. Unité de nettoyage stationnaire (6) selon la revendication 5, **caractérisée en ce que** le premier élément d'étanchéité (15) présente une surface de guidage agencée pour former un joint d'interstice vers l'ouverture d'entrée (A') du canal de filet filtrant.

7. Unité de nettoyage stationnaire (6) selon l'une quelconque des revendications précédentes 1 - 6, **caractérisée en ce que** le dispositif d'aspiration (14) comprend un corps creux (16) et un canal d'aspiration (30) avec l'ouverture d'aspiration (17), le canal d'aspiration (30) étant relié à la partie inférieure du corps creux (16).

8. Unité de nettoyage stationnaire (6) selon l'une quelconque des revendications précédentes 1 - 7, **caractérisée en ce qu'**un second élément d'étanchéité (15') est disposé à l'ouverture de sortie (A") du canal de filet filtrant, l'élément d'étanchéité (15') comprenant un élément d'étanchéité en forme de brosse (31).

9. Unité de nettoyage stationnaire (6) selon l'une quelconque des revendications précédentes 1 - 8, **caractérisée en ce qu'**elle comprend des autres moyens de soufflage (35) disposés en liaison avec le dispositif d'aspiration (14) pour souffler en direction de l'ouverture de sortie (A'') du canal de filet filtrant.

10. Unité de nettoyage stationnaire (6) selon l'une quelconque des revendications précédentes 1 - 9, **caractérisée en ce que** le dispositif d'air de remplacement (18) comprend une surface de support (32), agencée pour définir le canal de filet filtrant à l'ouverture de sortie (A").

11. Unité de nettoyage stationnaire (6) selon la revendication 10, **caractérisée en ce que** la surface de support (32) est incurvée.

12. Équipement de nettoyage (4) pour la tour de ventilation (1) d'un sécheur de pâte à papier, l'équipement (4) comprenant
- une première bobine rotative (5) et une seconde bobine rotative (5'), qui sont parallèles l'une à l'autre et disposées à distance l'une de l'autre,
- un filet filtrant (20) ayant une longueur qui est au moins deux fois supérieure à la distance entre la première et la seconde bobine rotative (5, 5'), le filet filtrant (20) ayant une première extrémité attachée à la première bobine (5) et une seconde extrémité attachée à la seconde bobine (5'), le filet (20) étant tendu par enroulement autour de la première et/ou de la seconde bobine (5, 5'),
- des moyens de transfert de puissance (8, 9, 10, 11, 12) disposés en liaison avec la première et la seconde bobine (5, 5') afin de les actionner de manière rotative,
**caractérisé en ce que** l'équipement (4) comprend au moins deux unités de nettoyage stationnaires (6) selon l'une quelconque des revendications 1 à 9 comprenant un canal de filet filtrant formé entre un dispositif d'aspiration (14) et un dispositif d'air de remplacement (18), disposés à proximité de la première et de la seconde bobine (5, 5'), le filet filtrant (20) étant agencé pour être transporté à travers les canaux de filet filtrant des unités de nettoyage stationnaires (6).

13. Équipement (4) selon la revendication 12, **caractérisé en ce que** les moyens de transfert de puissance comprennent un certain nombre de pignons (8, 9, 11) et une chaîne (10), agencés pour faire tourner la première et la seconde bobine (5, 5'), les moyens de transfert de puissance étant de préférence actionnables manuellement, par exemple par une manivelle (12).

14. Équipement (4) selon la revendication 12 ou 13, **caractérisé en ce que** le dispositif d'aspiration (14) est disposé en liaison avec un système d'aspiration central.

15. Tour de ventilation (1) d'un sécheur de pâte à papier comprenant
- au moins un ventilateur (2), de préférence plusieurs ventilateurs (2) superposés, agencés pour évacuer l'air humide d'une section de séchage du sécheur de pâte à papier et pour souffler de l'air chauffé dans la section de séchage du sécheur de pâte à papier,
- au moins un dispositif de chauffage (3), tel qu'un échangeur de chaleur, un radiateur à vapeur ou similaire, disposé sur le côté d'aspiration dudit ventilateur (2),
- au moins un équipement (4) selon la revendication 13 ou 14 disposé sur le côté du dispositif de chauffage (3) qui est opposé au ventilateur (2) pour protéger le dispositif de chauffage (3) et pour filtrer l'air à chauffer avant qu'il ne soit acheminé vers le dispositif de chauffage (3).
